# EUROPEAN PATENT SPECIFICATION

(11) **EP 4 046 903 B1**
(45) Date of publication and mention of the grant of the patent: **02.04.2025**
(21) Application number: 22155523.8
(22) Date of filing: 08.02.2022
(51) Int. Cl.: B63B 35/03, B63B 35/04, F16L 1/19, F16L 1/20

(54) **METHOD AND DEVICE FOR OVERBOARDING A JOINTED ELONGATED FLEXIBLE ARTICLE FROM A VESSEL**
VERFAHREN UND VORRICHTUNG ZUM ÜBERBORDEN EINES VERBUNDENEN LÄNGLICHEN FLEXIBLEN ARTIKELS AUS EINEM SCHIFF
PROCEDE ET DISPOSITIF POUR PASSER PAR-DESSUS BORD UN ARTICLE FLEXIBLE ALLONGE ARTICULE A PARTIR D'UN NAVIRE

(30) Priority: 23.02.2021 NL 2027624
(43) Date of publication of application: 24.08.2022
(73) Proprietor: DEME Offshore NL B.V., 4817 ZG Breda (NL)
(72) Inventor: GREMMEN, Marco Martinus Maria, 5351 PD Berghem (NL); BOLS, Lucas Adriaan Maria, 2380 Ravels (BE); SCHEERS, Philip Meijnardt Jacobus, 2321 Meer (BE)
(74) Representative: Arnold & Siedsma

(56) References cited:
- EP-A1- 2 862 828
- WO-A1-01/18349
- WO-A1-2020/180178
- WO-A2-2009/022177
- GB-A- 2 547 418

## Description

### FIELD OF THE INVENTION

The present invention relates to a method for overboarding from a vessel an elongated flexible article that comprises a joint between a first and a second length thereof. The invention further relates to a device for carrying out the method, and to a vessel comprising the device.

### BACKGROUND OF THE INVENTION

There is an increasing demand for laying elongated flexible articles on or in a seabed or the bed of another body of water. **In** the context of this application, an elongated flexible article is meant to comprise articles such as power, electrical, and data communication cables, but also articles like umbilicals, flexible pipelines for instance. Cable-laying may for instance be needed when connecting an off-shore wind turbine generator to the electricity network or to an offshore transformer station or any other type of offshore structure, or when connecting other structures that may be at a long distance to each other. When discussing cable-laying below, it should be clear that the invention is not limited to laying cables, and the invention may be used for laying any other flexible elongated article on or in a seabed.

Laying elongated flexible articles such as cables and pipelines on or in a seabed is commonly carried out from so-called cable-laying vessels adapted for this purpose. Typically, these vessels are fitted with one, two or more storage units for the elongated flexible article, overboarding guide means adapted to smoothly lead the article overboard into the water, article support means defining an article path between the storage unit(s) and the overboarding guide means, and pulling or hauling means for advancing the elongated article along the path. The pulling means may comprise a cable-tensioning device to control the tension and/or the pay-out speed of the article as it exits the vessel through the overboarding guide means.

Depths at which cables are to be laid down (installation depths) are ever increasing which also tends to increase required cable lengths. Since increased lengths of cable are not always available or provide difficulties in transporting of storage of these on a vessel, technology has been developed which actually joins two lengths of cable to each other. The joints in these products are subject to stringent manufacturers requirements, and may be made rigid or flexible. Often they are installed offshore in rigid casings in between the separately stored lengths of articles, aiming to disconnect the load bearing components of the joint from other functional components, such as electrical conductor or data transfer components for instance. A cable that comprises a joint between two lengths of cable offers some challenges when overboarded and lowered toward the installation depth.

WO 01/18349 A1 shows a methord and an article for overboarding from a vessel an elongated flexible article, which serve as basis for claims 1 and 10.

It is an object of the present invention therefore to provide an improved method and device for overboarding from a vessel an elongated flexible article that comprises a joint between a first and a second length thereof, in particular for the case where installation depths are such that the joint specifications may be exceeded during installation, and thus require additional measures. The method and device aim to provide maximum flexibility, in that they allow managing and minimizing the operational risks and loads on the joint and the flexible article, independent of the type of joint or flexible article.

### SUMMARY OF THE INVENTION

Accordingly, the invention provides a method in accordance with claim 1. **In** particular a method for overboarding from a vessel an elongated flexible article that comprises a joint between a first and a subsequent second length thereof, the method comprising the steps of:
a) advancing a first length of the article from a storage unit to overboarding guide means, provided at a height above a work deck of the vessel, and overboarding the first article length supported by the overboarding guide means until an end of the first length of the article is encountered;
b) holding the overboarded first article length with holding means configured to carry the overboarded first article length;
c) guiding the end of the first article length held by the holding means to a joining unit for preparing a joint positioned on the work deck of the vessel;
d) advancing a second subsequent length of the article to the joining unit on the work deck of the vessel and joining the ends of the first and second article lengths to obtain the joint on the work deck of the vessel;
e) while still holding the first article length, taking up the thus prepared joint from the joining unit and bringing it to the overboarding guide means such that part of the second article length is supported by the overboarding guide means and the joint is in a downstream position with respect to the overboarding guide means; and
f) overboarding the second article length with the first article length joined thereto supported by the overboarding guide means and optionally by the holding means until an end of the second length of the article is encountered.

The holding means are instrumental in preventing the occurrence of stress in the first and subsequent second article lengths. This allows making the joint between the two (first and second) article lengths, and further prevents stress occurring in this joint during further handling.

The invented method may be repeated with a third, fourth and more subsequent lengths of the article. It may even be envisaged to join lengths of different articles, as long as their dimensions are such that they may be joined.

The method according to the invention allows overboarding an elongated flexible article such as a cable from a vessel, wherein the article comprises a joint between a first and a second length thereof, with less risk for damage to the joint or the flexible article itself. In order to facilitate guiding the end of the first article length to a joining unit for preparing a joint, an embodiment of the method may be provided wherein advancing the first article length is halted when the end of the first length of the article is encountered.

According to a step of the method, overboarding the first article length supported by the overboarding guide means and the holding means is carried out until an end of the first length of the article is encountered. If overboarding would continue, the first length of the article could possibly leave or fall off the overboarding guide means. When halting the overboarding of the first length of the article, a part of the first article close to the end may actually be retained by the overboarding guide means, for instance by friction between the article and a support surface of the overboarding guide means. A practical embodiment of the invention however provides a method wherein holding the overboarded first length of the article comprises suspending the first length in a hang-off clamp when the end of the first length of the article is encountered to make that part of the first article length that extends between the end and the hang-off clamp to be substantially unloaded. The hang-off clamp clamps or holds the first length of the flexible article at one end of the first article, and, at another end may be held by the vessel, for instance by the overboarding guide means or by another support means which is able to take the load of the suspended article. Between the hang-off clamp ends, a rope may be provided to cover the distance between the clamping and holding positions. Suspending the overboarded first length of the article makes that part of the first article length that extends between its end and the position of the hang-off clamp end is substantially unloaded. This further facilitates guiding the end of the first article length to a joining unit for preparing a joint.

The joint between the first and second lengths of the flexible article may be prepared at any location on the vessel, as long as joining the two lengths of the article is provided by a method wherein the joint is prepared at work deck's height of the vessel.

Joining of two ends of a flexible article such as an electronic or data-transmission cable is known per se. **In** the context of the present invention, it may be beneficial to provide an embodiment of the method, wherein the joined ends of the first and second lengths of the article are protected by a protective cover. The cover may be flexible in that it may accommodate a radius of curvature, but typically is rigid in order to prevent the joint between the two ends from being bent or angled.

According to a step of the invented method, the thus prepared joint is taken up from the joining unit and brought to the overboarding guide means such that part of the second article length is supported by the overboarding guide means and the joint is in a downstream position with respect to the overboarding guide means. **In** this context, it may be beneficial in an embodiment when the first and second lengths of the article are protected by bend restrictors over a distance at either side of the joint, and preferably such that the distances at either side together cover at least a length of the overboarding guide means that support the article.

In order to prevent damaging the flexible article by a too short radius of curvature, an embodiment of the method is characterized in that the article is guided over a curved support surface of the overboarding guiding means, preferably a semi-circular support surface. A curved surface may for instance be formed by a plurality of rollers that guide the flexible elongated article along the curved surface, or may be formed by a closed surface.

The radius of the semi-circular support surface in an embodiment is preferably chosen to be equal to or larger than the minimum radius of curvature of the flexible elongated article, such as a cable. Bending the cable along a radius that is smaller than the minimum radius of the cable induces the risk of damage.

The overboarding guide means may be provided at a height (non-zero) above a work deck of the vessel. The height may depend on the particular article that needs to be overboarded but would in circumstances be at least 5 m, more preferably at least 10 m, and more. The overboarding guiding means and its support surface for the article lengths may be provided above work deck's height by providing a suitable construction that extends in a substantially vertical direction. At least a part of the elongated flexible article before overboarding then extends in a substantially vertical direction. The joint prepared in the joining unit may also be brought up along the above referred height. However, in other embodiments the overboarding guiding means may not be provided above work deck's height by providing the suitable construction. **In** such embodiments, the overboarding guiding means may comprise a chute provided at an edge of the work deck of the vessel, for instance at a side edge or an aft edge. In such embodiments, at least a part of the elongated flexible article before overboarding then extends in a horizontal or slanted direction relative to the deck of the vessel.

The joint prepared in the joining unit may in this embodiment also be brought up to some height above deck because the rigidity of the joint prevents a short bending radius when bringing the elongated flexible article before overboarding from its horizontal position to its substantially vertical position after overboarding via the chute. A practical embodiment of the method thereto provides the feature of taking up the prepared joint from the joining unit by a hoisting crane. Such a hoisting crane may for instance be provided on top of the overboarding guide means, but may also be provided on the work deck of the vessel.

The method may be used for overboarding from a vessel an elongated flexible article that comprises a joint between a first and a second length thereof, but its use in cable-laying operations is preferred, in particular in off-shore cable laying operations carried out by a cable-laying vessel or other floating device.

In another aspect of the invention, a device for overboarding from a vessel an elongated flexible article that comprises a joint between a first and a second length thereof is provided. The device may be used in carrying out the invented method.

The device for overboarding from a vessel an elongated flexible article that comprises a joint between a first and a second length thereof according to the invention comprises a storage unit for the first and second article lengths, and article support means for advancing the article lengths from the storage unit to overboarding guide means, provided at a height above a work deck of the vessel, and configured to support an article length and overboard said article length, wherein the device further comprises a joining unit positioned on the work deck of the vessel and configured for joining ends of the first and second article lengths to obtain the joint on the work deck of the vessel, and handling means configured to take up a prepared joint from the joining unit and bring it to the overboarding guide means such that part of the second article length is supported by the overboarding guide means and the joint is in a downstream position with respect to the overboarding guide means.

An embodiment of the device further comprising a hang-off clamp configured to suspend an overboarded length of the article, has certain advantages, as has been already disclosed above.

In another embodiment of the device, the joining unit is positioned at a downstream end of the overboarding guide means with respect to the advancing article length.

The invention provides a device wherein the joining unit is positioned at work deck's height of the vessel.

A further improved device is equipped with overboarding guiding means that comprise a curved support surface configured to guide the article, preferably a semi-circular support surface.

To facilitate safe and reliable handling of a joint between two lengths of article, an embodiment of the device is provided wherein the handling means comprise a hoisting crane.

The article support means according to a further embodiment of the invented device, comprise tensioners, optionally provided on the overboarding guide means.

In another aspect of the invention, a vessel, preferably a cable-laying vessel is provided, comprising the invented device according to any one of the disclosed embodiments, and adapted for overboarding from the vessel an elongated flexible article that comprises a joint between a first and a second length thereof.

The device may be installed on the vessel in any conceivable way. A practical embodiment is provided by a vessel wherein the overboarding guide means are provided at a side edge of the vessel, or hull opening, such as a moonpool.

It is explicitly mentioned that the embodiments disclosed in the present application may be combined in any possible combination of these embodiments, and that each separate embodiment may be the subject of a divisional application.

### DETAILED DESCRIPTION OF THE PREFERRED EMBODIMENTS

The invention will now be described in more detail by reference to the attached figures, and a cable laying embodiment. It is however explicitly mentioned that the invention is not limited to laying cables and the invention encompasses laying any other elongated flexible article on or into a seabed.
Figure 1 schematically shows a perspective view from starboard of a cable laying vessel provided with a device according to one embodiment of the invention;
Figure 2 schematically shows a perspective view from starboard of the vessel of figure 1 carrying out a step of a method in accordance with the invention;
Figure 3 schematically shows a perspective view from portside of the vessel of figure 1 carrying out a further step of a method in accordance with the invention;
Figure 4 schematically shows a perspective view from portside of the vessel of figure 1 carrying out a further step of a method in accordance with the invention;
Figure 5 schematically shows a perspective view from portside of the vessel of figure 1 carrying out a further step of a method in accordance with the invention;
Figure 6 schematically shows a perspective view from starboard of the vessel of figure 1 carrying out a further step of a method in accordance with the invention;
Figure 7 schematically shows a perspective view from starboard of the vessel of figure 1 carrying out a further step of a method in accordance with the invention;
Figure 8 schematically shows a perspective view from starboard of the vessel of figure 1 carrying out a further step of a method in accordance with the invention;
Figure 9 schematically shows a perspective view from starboard of the vessel of figure 1 carrying out a further step of a method in accordance with the invention;
Figure 10 schematically shows a perspective view from starboard of the vessel of figure 1 carrying out a further step of a method in accordance with the invention;
Figure 11 schematically shows a perspective view from portside of the vessel of figure 1 carrying out a further step of a method in accordance with the invention; and finally
Figure 12 schematically shows a perspective view from portside of the vessel of figure 1 carrying out another step of a method in accordance with the invention;

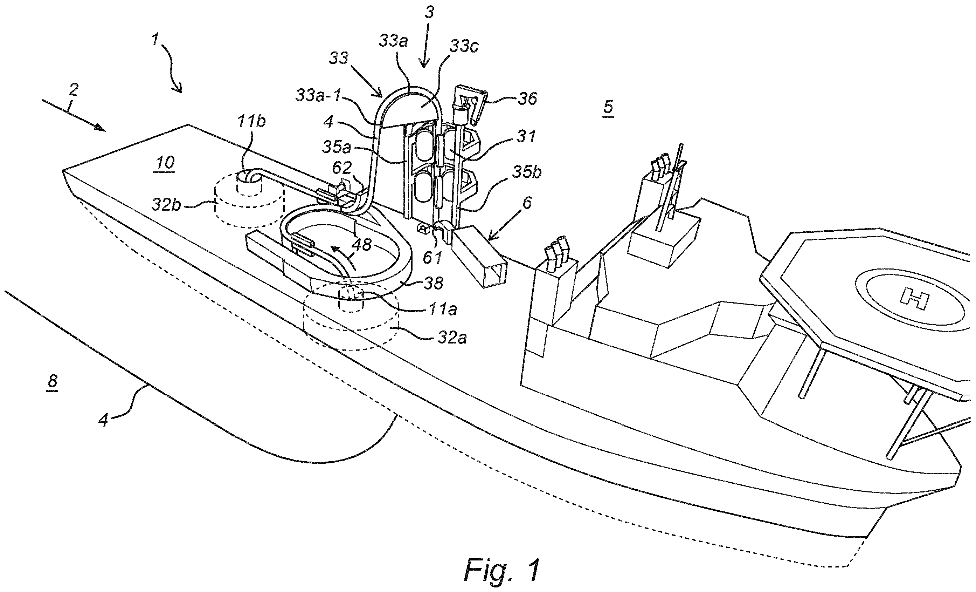

Referring to figure 1, a cable-laying vessel 1 is shown in a perspective view from starboard side. The vessel 1 is sailing in a sailing direction 2. The vessel 1 comprises a device 3 according to an embodiment of the invention. The device 3 is configured for overboarding from the vessel 1 an elongated flexible article in the form of a cable 4. Overboarding means (33, 61) carry the cable 4 from a storage 32 (or two storage carrousels 32a, 32b) on board of the vessel 1 into the water mass 5 wherein the vessel 1 is sailing. **In** cable-laying, the cable 4 is laid on or in the seabed, such as in a trench.

According to the invention, the cable 4, when overboarded, comprises a joint 40 between a first length 4a of the cable 4, and a second length 4b of the cable. Making the joint 40 between both lengths (4a, 4b) of the cable 4 is part of the invented method and is carried out on board of the vessel 1 by part of the invented device, in particular a joining unit 6 described in more detail further below.

The device 3, configured for overboarding from the vessel 1 the elongated flexible cable 4 comprises a first and second storage unit (32a, 32b) for each of the first and second cable lengths (4a, 4b). It is also possible to provide the vessel 1 with one storage unit for each length (4a, 4b) of cable 4, or even with more storage units for additional lengths of cable 4. As shown for instance in figure 1, the cable 4 originates from a first deck penetration 11a that offers access to a first storage unit 32a provided in an area below deck 10. The storage unit 32a may for instance comprise a carousel around which the cable 4 is wound up until a predetermined filling degree of the storage unit 32a is reached. The storage unit 32a may be arranged below deck 10 but may also be arranged on deck 10. In the embodiment shown, the storage unit 32a comprises a cylindrical body in which the cable 4 (or cable lengths 4a and 4b) can be arranged in a circumferential direction around a centrally disposed core. The storage unit 32a may be rotatable around a central rotation axis in a paying out direction 48 in which the cable 4 is led along support means or conveying structure 38 to an overboarding guide means 33. The cable 4 is advanced along the overboarding guide means 33 by cable tensioners 31, provided in an appropriate support structure 34. In a similar fashion, a second storage unit 32b may be provided for paying out the second cable length 4b through a second deck penetration 11b, as disclosed further below.

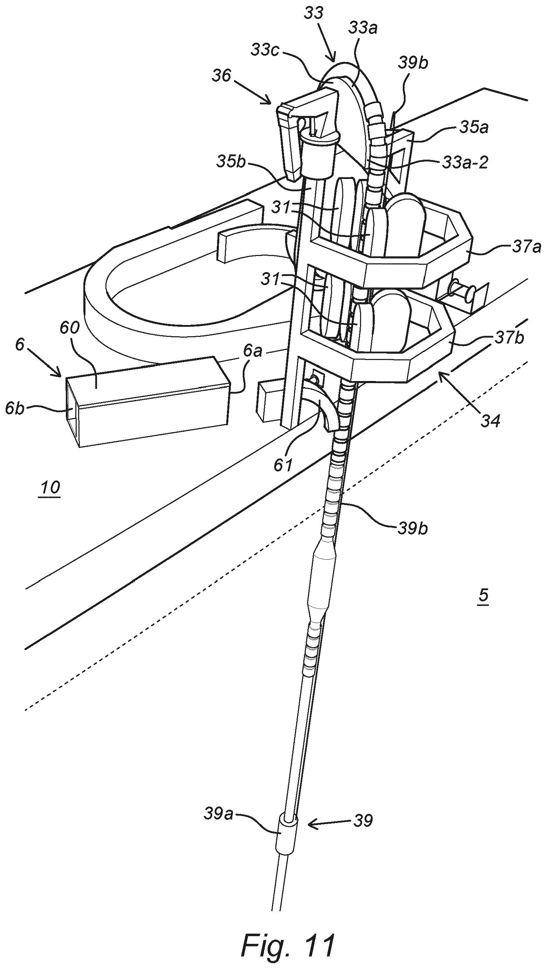

As best shown in figure 11, the support structure 34 comprises two posts (35a, 35b) that extend about vertically from the deck 10 of the vessel 1 to an appropriate height, which may be 5 m and higher. The posts (35a, 35b) are, at a bottom side, connected to the deck 10 of the vessel 1, whereby the connection is typically pinned to allow rotation, if needed. A top free end of at least one of the posts (35a, 35b) is provided with a handling means for a jointed cable 4. The handling means in the embodiment shown comprises a hoisting crane 36, the operation of which will be explained further below. The posts (35a, 35b) are interconnected by a pair of bracket structures (37a, 37b) that together with the posts (35a, 35b) form a support for cable tensioners 31 for clamping and advancing the cable 4 over the overboarding guiding means 33 and into the water mass 5.

In an embodiment, the overboarding guide means 33 are provided at height above the deck 10 of the vessel 1 and comprise a semi-circular support surface 33a provided by a plate 33c positioned at height by a post 33b. The post 33b extends about vertically from the deck 10 of the vessel 1 to an appropriate height, which may be 5 m and higher. The post 33b is, at a bottom side, connected rigidly to the deck 10 of the vessel 1. The cable 4 is guided by the semi-circular support surface 33a, provided by the plate 33c, and enters the support surface 33a at an upstream end 33a-1 thereof. It is noted that the support surface 33a need not be continuous, and may also be formed by a plurality of rollers or other support members, positioned one after the other to form some virtual support surface. The plate 33c is dimensioned and positioned such that a cable 4 hanging freely from a downstream end 33a-2 of the support surface 33a is able to enter the water mass 5 without touching the hull of the vessel 1. The overboarding guide means 33 may beneficially be installed on the deck 10 of the vessel 1 at any side edge of the vessel 1, such as the port side edge shown in the figures. The vessel may also be provided with a moonpool for instance, whereby the overboarding guide means 33 border an edge of the moonpool.

Besides the structure 33, the overboarding guide means may also comprise a chute 61. In another embodiment, the overboarding guide means do not comprise the structure 33 but only a chute 61.

In order to prevent damaging the cable 4 or cable lengths (4a, 4b) by a too short radius of curvature, the cable 4 (4a, 4b) is guided over the curved semi-circular support surface 33a provided by the plate 33c, or, in another embodiment, by a plurality of rollers for instance. The radius of the semi-circular support surface 33a may be chosen to be equal to or larger than the minimum radius of curvature of the flexible cable 4, which is a design parameter. Bending the cable 4 along a radius that is smaller than the minimum radius of the cable 4 may induce a risk of damage to the cable 4.

According to the embodiment shown, the device 3 further comprising a hang-off clamp 39 configured to suspend an overboarded length 4a of the cable 4, or any other subsequent cable length end. The clamp 39 is configured to clamp a cable length 4a, and hold it by having the clamp part 39a of the hang-off clamp 39 to be connected to a part of the overboarding guide means 33 by a rope 39b or other suspension means. The rope 39b enables the clamp part 93a of the hang-off claim 39 to be lowered towards the water mass 5, or to be pulled up away from the water mass 5, whichever is required.

As shown, the device 3 further comprises a cable joining unit 6 configured for joining ends of the first and second article lengths (4a, 4b) to obtain the joint 40. Joining two lengths (4a, 4b) of cables is known per se. The joining unit 6 may be a closable container that is provided with an entrance (6a, 6b) for each of the ends of the cable lengths (4a, 4b). Preferably, the entrances (6a, 6b) are positioned at opposite sides of the container. The container may be closed and reopened by a roof part 60 that may be shifted or tilted or otherwise (partly) removed. The joining unit 6 may be positioned at a downstream end of the overboarding guide means 33 with respect to an advancing cable length (4a, 4b). **In** the embodiment shown, the joining unit 6 is conveniently positioned on deck 10 of the vessel 1. A downstream guiding structure or chute 61 is also provided on deck 10 of the vessel 1. The guiding structure or chute 61 may support and guide a cable length 4a towards the container and into the entrance 6a for joining to a second cable length 4b, provided through the entrance 6b. Further, an upstream guiding structure 62 is provided on deck 10 of the vessel 1 in an upstream position with respect to the overboarding guide means 33, as shown in figure 1 for instance. The upstream guiding means 62 is instrumental in keeping a length of cable 4 down and allow it to rise relatively steeply to the overboarding guide means 33.

The handling means in the form of the hoisting crane 36 is configured to take up a prepared joint 40 from the joining unit 6 and bring it to the overboarding guide means 33 such that part of the second cable length 4b is supported by plate 33c of the overboarding guide means 33, and such that the joint 40 is positioned downstream with respect to the overboarding guide means 33.

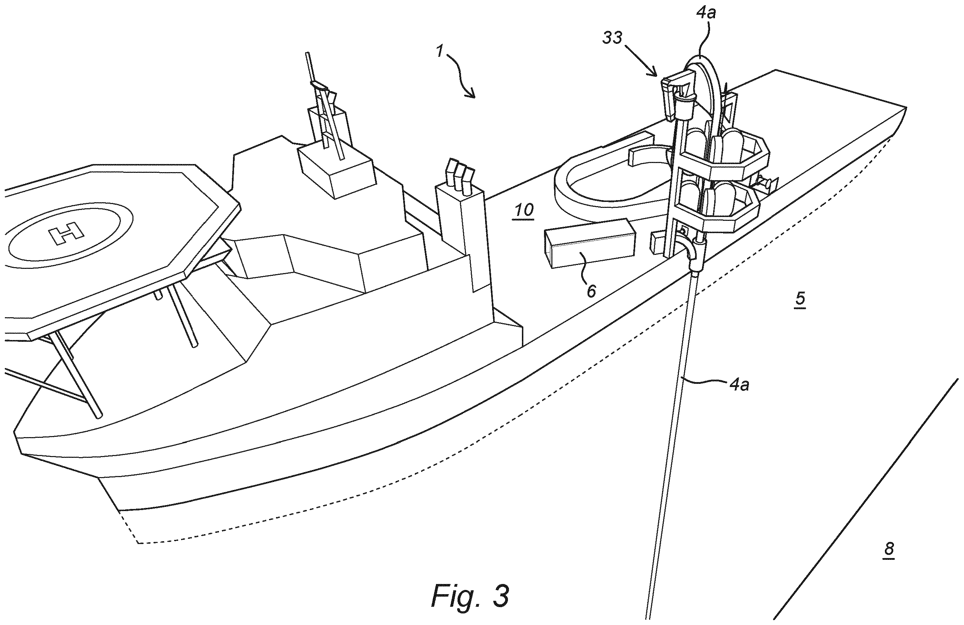

Having disclosed the invented device 3, we now refer to the sequence of figures 1-12 showing perspective views of the vessel and illustrating several steps in carrying out a method in accordance with an embodiment of the invention.

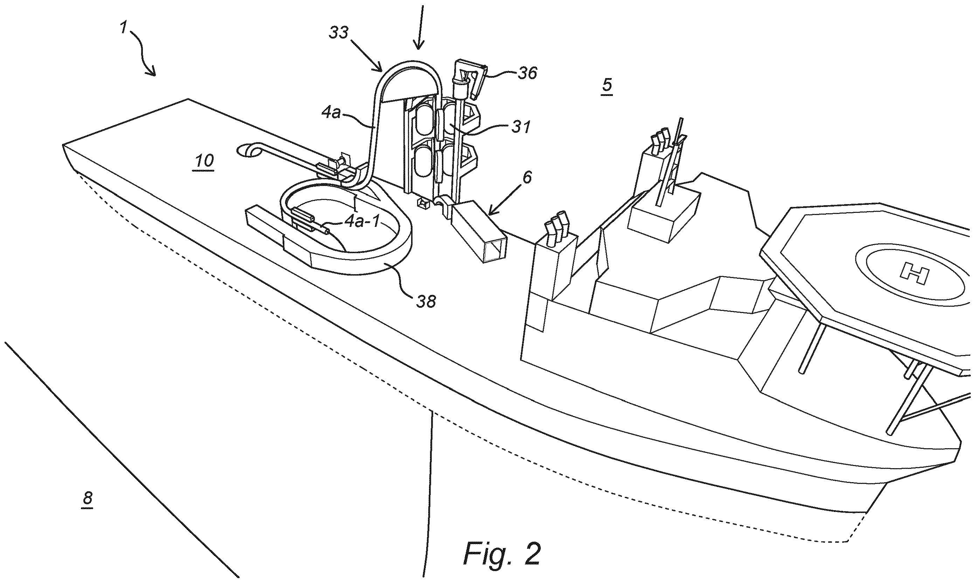

Figure 1 illustrates a method wherein a cable 4 is laid down on a sea bed 8. The cable 4 is reeled off the storage unit 32 in the reeling direction 11. It is led along the conveying structure 38, underneath the upstream guiding means 62, and to the overboarding guide means 33, in which it is led along the support surface 33a of the semi-circular plate 33c. As already mentioned above, the support surface 33a may also be formed by a discontinuous support surface, formed by a plurality of rollers for instance. Any support structure suitable to this end may be used. The cable 4 is advanced along the overboarding guide means 33 by the cable tensioners 31 and brought overboard at the port side of the vessel 1, and laid down on the sea bed 8, as shown in figures 1 and 2 for instance. The cable 4 is reeled off its storage unit 32 until a first length 4a has been reeled off. As shown in figure 2, the first cable length 4a has been reeled off its storage unit 32 and a free end 4a-1 surfaces from this storage unit 32. In the state of the art, this would terminate cable-laying, or a second cable length 4b has to be brought over the overboarding guide means 33.

According to the invention, the first length 4a of cable 4 is now joined to a second length 4b of the cable 4. To this end, the first length 4a that is hanging over the overboarding guide means 33 and downwards into the water mass 5 is caught by the hang-off clamp 39. The clamp part 39a clamps a cable length 4a, and holds it in position since the clamp part 39a is suspended from the rope 39b (or more ropes 39b) that connects to the vessel, for instance near the overboarding guide means 33. This allows the first cable length 4a to be held while making that part of the first cable length 4a that extends between the clamp part 39a and its free end 4a-1 to be substantially stress-free. In this situation, advancing the first cable length 4a is halted when the end 4a-1 of the first cable length 4a is encountered.

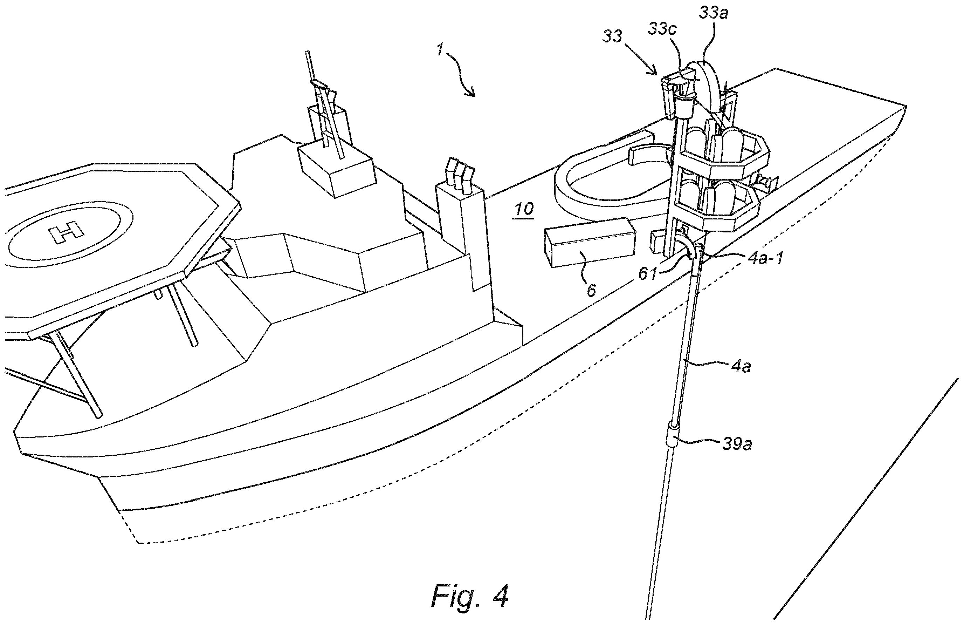

As shown in figure 4, the first cable length 4a is then advanced over the support surface 33a of the overboarding guide means 33 until the free end 4a-1 is located downstream of the overboarding guide means 33 at the height of the downstream guiding means 61. In this method step, the support surface 33a of the semi-circular plate 33c is free from cable.

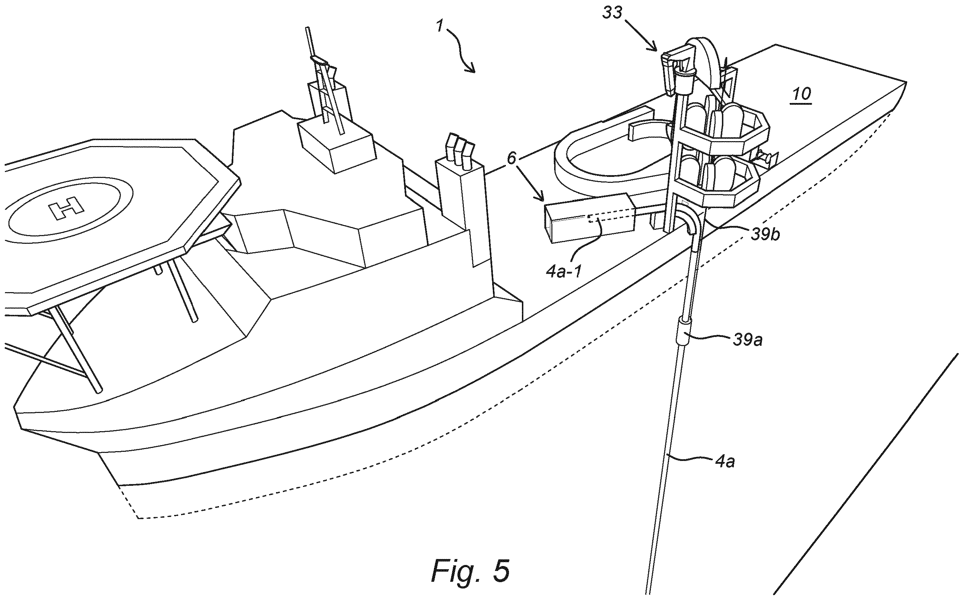

As shown in figure 5, the free end 4a-1 of the first cable length 4a is then provided over the downstream guiding means 61 and into the entrance 6a of the cable joining unit 6, by hauling the rope 39b.

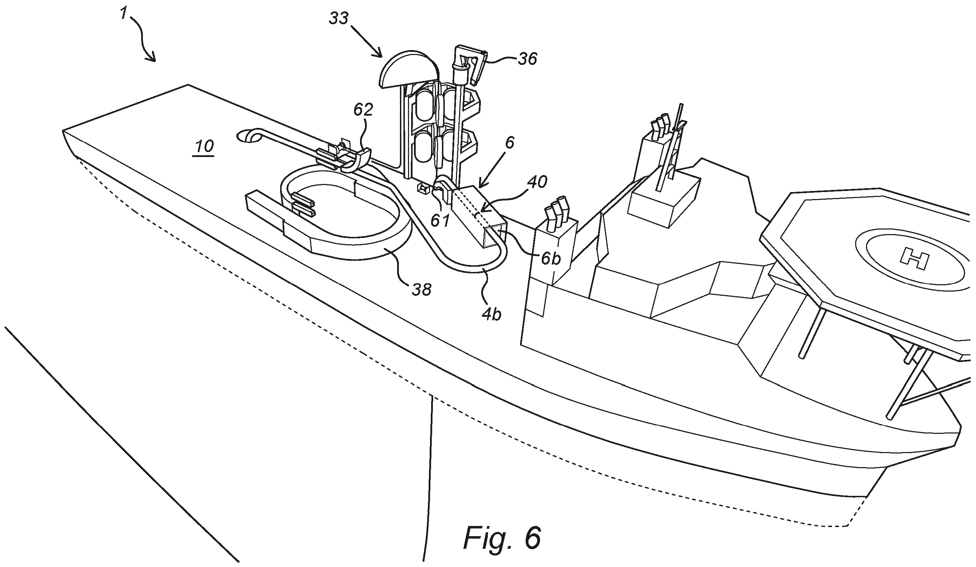

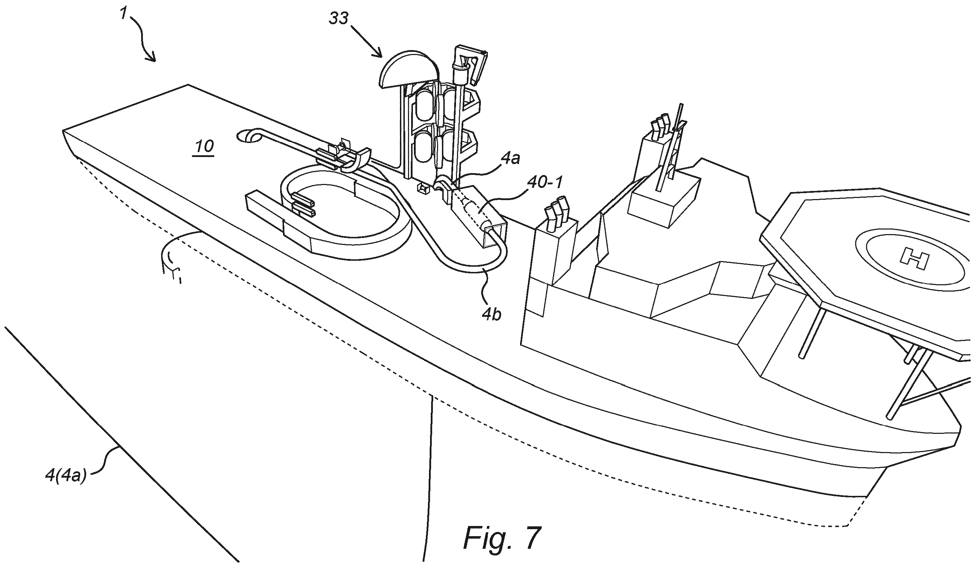

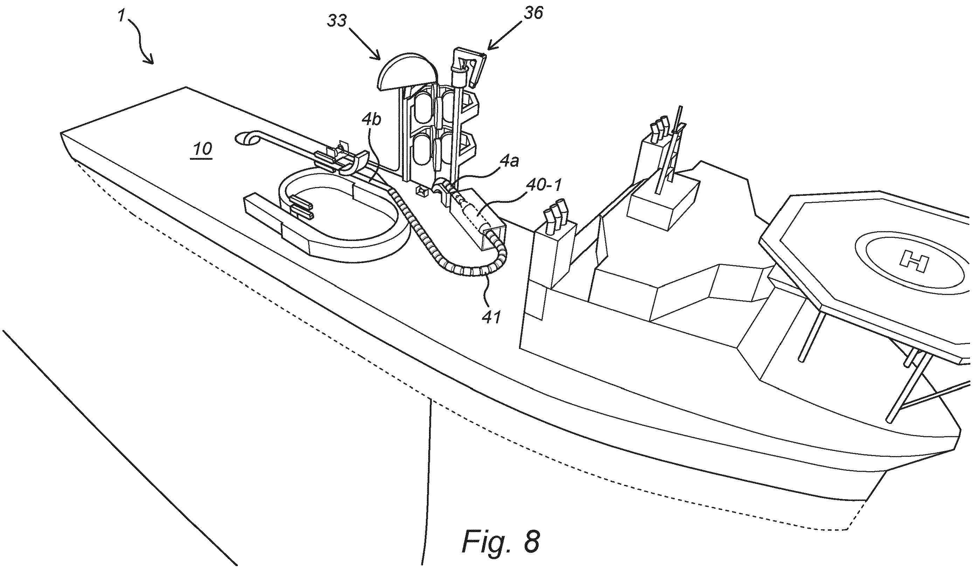

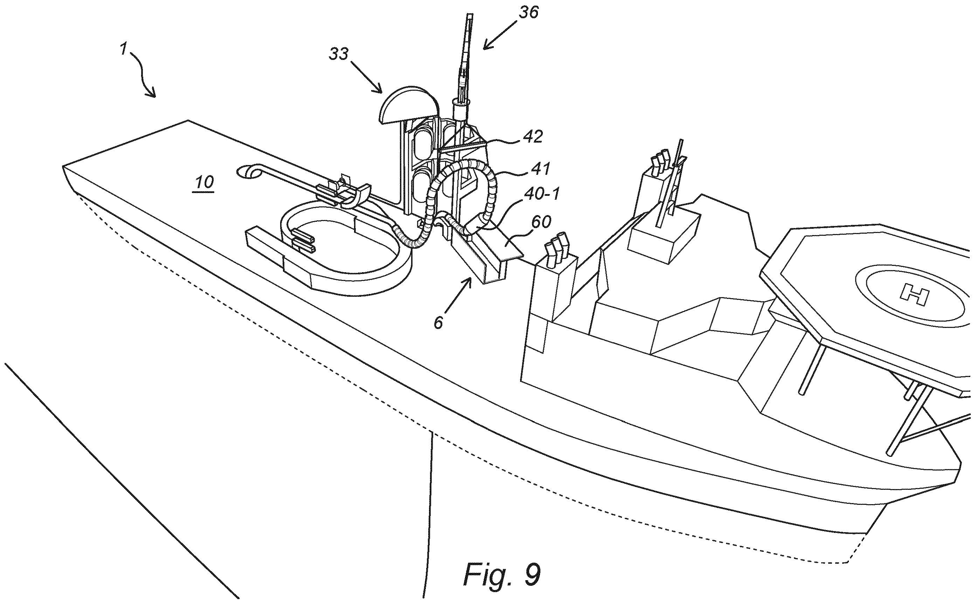

With reference to figure 6, a second length 4b of cable 4 is then reeled off from the second storage unit 32b, through a second deck penetration 11b and led over part of the conveying structure 38 to the entrance 6b of the cable joining unit 6. The two ends of the cable lengths (4a, 4b) are then joined in the joining unit 6 according to well known practice, which may involve providing the joint direction 40 with a rigid protective cover or sleeve 40-1 (figure 7), and which may optionally involve providing parts of the cable ends (4a, 4b) at both sides of the joint 40 with bend restrictors 41 (figure 8), in order to safeguard the cable shape when it is taken up by the hoisting crane 36 (figure 9). Indeed, according to figure 9, part of the second cable end 4b, optionally protected by the bend restrictor 41, is taken up by the hoisting crane 36, which is for this purpose, optionally provided with a hoisting frame 42. In order to be able to take the joint 40 out of the cable joining unit 6, the roof 60 thereof may be slid away, or tilted into an open position, as shown. In other embodiments, the joining unit may be removed in part or as a whole.

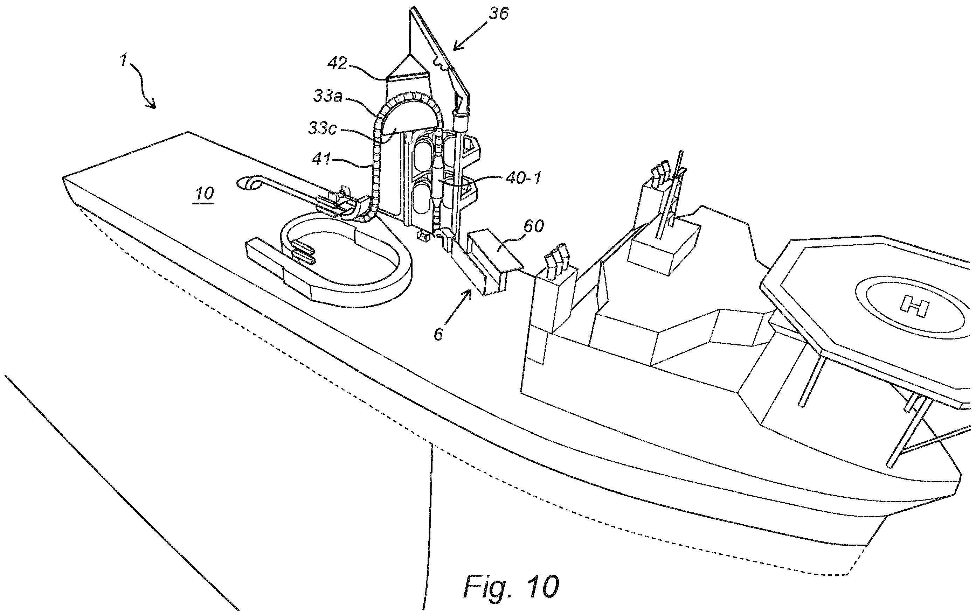

The hoisting crane 36 lifts the second cable end 4b, optionally protected by the bend restrictor 41, until is takes support on the support surface 33a of the semi-circular plate 33c of the overboarding guide means 33, as shown in figure 10. In this position, the joint 40 and protective sleeve 40-1 are provided downstream of the overboarding guide means 33.

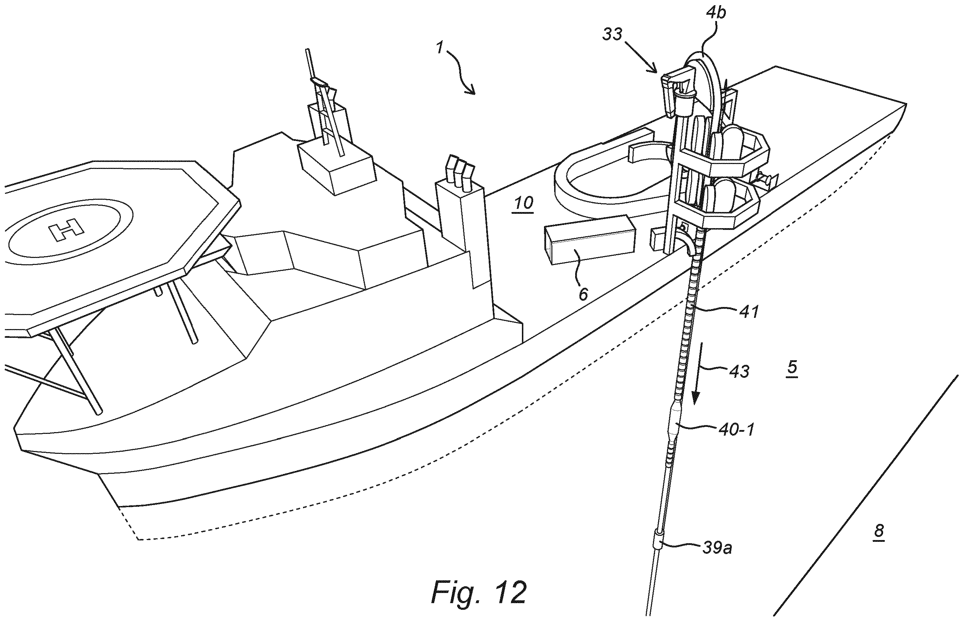

According to figures 11 and 12, the second length 4b of the cable 4 is then overboarded in the direction 43 towards the water mass 5 with the first cable length 4a joined thereto, while being supported by the support surface 33a of the overboarding guide means 33, and by the hang off clamp 39, until an end of the second length 4b of the cable 4 may be encountered. During overboarding, the second length 4b of the cable is advanced by the tensioners 31. Support of the joined cables length (4a, 4b) by the hang off clamp 39 reliefs stresses in the joined cable lengths (4a, 4b) and the joint.

The method according to the invention allows overboarding the elongated flexible cable 4 from the vessel 1, wherein the cable 4 comprises a joint 40 between a first length 4a and a second length 4b thereof, with less risk for damage to the joint 40 or the flexible cable 4 itself. The increased total length of the jointed cable (4a, 4b) may be used to supply the distance needed for routes through high depths.

### List of reference numbers

- 1: cable-laying vessel
- 2: sailing direction
- 3: device configured for overboarding from the vessel 1 an elongated flexible cable
- 4: elongated flexible cable
- 4a: first length of cable 4
- 4b: second length of cable 4
- 5: water mass
- 6: cable joining unit
- 6a: entrance of cable joining unit for first length of cable
- 6b: entrance of cable joining unit for second length of cable
- 8: sea bed
- 10: vessel deck
- 11a: first deck penetration
- 11b: second deck penetration
- 31: cable tensioners
- 32a: first storage unit
- 32b: second storage unit
- 33: overboarding guide means
- 33a: semi-circular support surface
- 33b: post
- 33c: semi-circular plate
- 35a: post
- 35b: post
- 36: hoisting crane
- 37a: bracket structure
- 37b: bracket structure
- 38: conveying structure
- 39: hang off clamp
- 39a: clamp part
- 39b: clamp suspension rope
- 40: cable joint
- 40-1: rigid joint cover
- 41: bend restrictor
- 42: hoisting frame
- 48: paying out direction
- 60: roof part of cable joining unit
- 61: downstream guiding structure or chute
- 62: upstream guiding structure

## Claims

1. Method for overboarding from a vessel (1) an elongated flexible article (4) that comprises a joint (40) between a first and a subsequent second length thereof, the method comprising the steps of:
a) advancing a first length (4a) of the article (4) from a storage unit (32a, 32b) to overboarding guide means (33), provided at a height above a work deck (10) of the vessel (1), and overboarding the first article length (4a) supported by the overboarding guide means (33) until an end of the first length (4a) of the article (4) is encountered;
b) holding the overboarded first article length (4a) with holding means configured to carry the overboarded first article length (4a);
c) guiding an end of the first article length (4a) held by the holding means to a joining unit (6) for preparing a joint (40) positioned on the work deck (10) of the vessel (1);
d) advancing a second length (4b) of the article (4) to the joining unit (6) on the work deck (10) of the vessel (1) and joining the ends of the first and second article lengths to obtain the joint (40) on the work deck (10) of the vessel (1);
e) while still holding the first article length (4a), taking up the thus prepared joint (40) from the joining unit (6) and bringing it to the overboarding guide means (33) such that part of the second article length (4b) is supported by the overboarding guide means (33) and the joint (40) is in a downstream position with respect to the overboarding guide means (33); and
f) overboarding the second article length (4b) with the first article length (4a) joined thereto supported by the overboarding guide means (33) and optionally by the holding means until an end of the second length (4b) of the article (4) is encountered.

2. Method according to claim 1, wherein advancing the first article length (4a) is halted when the end of the first length (4a) of the article (4) is encountered.

3. Method according to claim 1 or 2, wherein holding the first length (4a) of the article (4) comprises suspending the first length (4a) in a hang-off clamp (39) when the end of the first length (4a) of the article (4) is encountered to make that part of the first article length (4a) that extends between the end and the hang-off clamp (39) to be substantially unloaded.

4. Method according to any one of the preceding claims, wherein the joined ends of the first and second lengths (4a, 4b) of the article (4) are protected by a protective cover (40-1).

5. Method according to any one of the preceding claims, wherein the first and second lengths (4a, 4b) of the article (4) are protected by bend restrictors (41) over a distance at either side of the joint (40).

6. Method according to claim 5, wherein the distances over which the bend restrictors (41) extend at either side of the joint (40) together cover at least a length of the overboarding guide means (33) that support the article (4).

7. Method according to any one of the preceding claims, wherein the article (4) is guided over a curved support, providing a continuous and/or discontinuous support surface of the overboarding guiding means (33), preferably a semi-circular support surface (33a).

8. Method according to any one of the preceding claims, wherein the prepared joint (40) is taken up from the joining unit (6) by a hoisting crane (36).

9. Method according to any one of the preceding claims, wherein advancing the article first and second lengths (4a, 4,b) is carried out by tensioners (31), optionally provided on the overboarding guide means (33).

10. Device (3) for overboarding from a vessel (1) an elongated flexible article (4) that comprises a joint (40) between a first and a second length (4a, 4b) thereof, the device (3) comprising a storage unit (32a, 32b) for each of the first and subsequent second article lengths (4a, 4b), and article support means (38) for advancing the article lengths (4a, 4b) from the storage unit (32a, 32b) to overboarding guide means (33), provided at a height above a work deck (10) of the vessel (1), and configured to support an article length (4a) and overboard said article length (4a), wherein the device (3) further comprises a holding means configured to hold and carry an overboarded first article length (4a), a joining unit (6) positioned on the work deck (10) of the vessel (1) and configured for joining ends of the first and second article lengths (4a, 4b) to obtain the joint (40) on the work deck (10) of the vessel (1), and handling means configured to take up a prepared joint (40) from the joining unit (6) and bring it to the overboarding guide means (33) such that part of the second article length (4b) is supported by the overboarding guide means (33) and the holding means and the joint (40) is in a downstream position with respect to the overboarding guide means (33).

11. Device (3) according to claim 10, wherein the holding means comprise a hang-off clamp (39) configured to suspend an overboarded length of the article (4).

12. Device (3) according to claim 10 or 11, wherein the joining unit (6) is positioned at a downstream end of the overboarding guide means (33) with respect to the advancing article length (4a, 4b).

13. Device (3) according to any one of claims 10-12, wherein the overboarding guiding means (33) comprise a curved support surface, either continuous or discontinuous, configured to guide the article (4), preferably a semi-circular support surface (33a).

14. Device (3) according to any one of claims 10-13, wherein the handling means comprise a hoisting crane (36).

15. Device (3) according to any one of claims 10-14, wherein the article support means (38) comprise tensioners (31), optionally provided on the overboarding guide means (33).

16. A vessel (1) comprising a device (3) according to any one of claims 10-15 for overboarding an elongated flexible article (4) that comprises a joint (40) between a first and a second length (4a, 4b) thereof.

## Patentansprüche

1. Verfahren zum Überborden eines länglichen, flexiblen Artikels (4) aus einem Schiff (1), der eine Verbindung (40) zwischen einer ersten und einer nachfolgenden zweiten Länge desselben aufweist, wobei das Verfahren die folgenden Schritte umfasst:
a) Vorschieben einer ersten Länge (4a) des Artikels (4) von einer Lagereinheit (32a, 32b) zu einem Überbordführungsmittel (33), das in einer Höhe über einem Arbeitsdeck (10) des Schiffs (1) vorgesehen ist, und Überborden der von dem Überbordführungsmittel (33) gestützten ersten Artikellänge (4a), bis ein Ende der ersten Länge (4a) des Artikels (4) erreicht ist;
b) Halten der überstehenden ersten Artikellänge (4a) mit einem Haltemittel, das zum Tragen der überstehenden ersten Artikellänge (4a) konfiguriert ist;
c) Führen eines Endes der ersten Artikellänge (4a), die von den Haltemitteln gehalten wird, zu einer Verbindungseinheit (6) zum Herstellen einer Verbindung (40), die auf dem Arbeitsdeck (10) des Schiffes (1) angeordnet ist;
d) Vorschieben einer zweiten Länge (4b) des Artikels (4) zu der Verbindungseinheit (6) auf dem Arbeitsdeck (10) des Schiffs (1) und Verbinden der Enden der ersten und zweiten Artikellänge, um die Verbindung (40) auf dem Arbeitsdeck (10) des Schiffs (1) zu erhalten;
e) während die erste Artikellänge (4a) noch gehalten wird, Aufnehmen der so vorbereiteten Verbindung (40) aus der Verbindungseinheit (6) und Bringen derselben zu dem Überbordführungsmittel (33), so dass ein Teil der zweiten Artikellänge (4b) durch die Überbordführungsmittel (33) gestützt wird und sich die Verbindung (40) in einer stromabwärtigen Position in Bezug auf die Überbordführungsmittel (33) befindet; und
f) Überborden der zweiten Artikellänge (4b) mit der damit verbundenen ersten Artikellänge (4a), die von dem Überbordführungsmittel (33) und wahlweise von dem Haltemittel gestützt wird, bis ein Ende der zweiten Länge (4b) des Artikels (4) erreicht ist.

2. Verfahren nach Anspruch 1, wobei das Vorschieben der ersten Artikellänge (4a) angehalten wird, wenn das Ende der ersten Länge (4a) des Artikels (4) erreicht ist.

3. Verfahren nach Anspruch 1 oder 2, wobei das Halten der ersten Länge (4a) des Artikels (4) das Aufhängen der ersten Länge (4a) in einer Abhängeklemme (39) umfasst, wenn das Ende der ersten Länge (4a) des Artikels (4) erreicht wird, um den Teil der ersten Artikellänge (4a), der sich zwischen dem Ende und der Abhängeklemme (39) erstreckt, im Wesentlichen zu entlasten.

4. Verfahren nach einem der vorhergehenden Ansprüche, wobei die verbundenen Enden der ersten und zweiten Längen (4a, 4b) des Artikels (4) durch eine Schutzhülle (40-1) geschützt werden.

5. Verfahren nach einem der vorhergehenden Ansprüche, wobei die erste und die zweite Länge (4a, 4b) des Artikels (4) über eine Distanz auf beiden Seiten der Verbindung (40) durch Biegebegrenzer (41) geschützt werden.

6. Verfahren nach Anspruch 5, wobei die Distanzen, über die sich die Biegebegrenzer (41) beiderseits der Verbindung (40) erstrecken, zusammen mindestens eine Länge der den Gegenstand (4) tragenden Überbordführungsmittel (33) abdecken.

7. Verfahren nach einem der vorhergehenden Ansprüche, wobei der Artikel (4) über eine gekrümmte Auflage geführt wird, die eine kontinuierliche und/oder diskontinuierliche Auflagefläche der Überbordführungsmittel (33), vorzugsweise eine halbkreisförmige Auflagefläche (33a), bereitstellt.

8. Verfahren nach einem der vorhergehenden Ansprüche, wobei die vorbereitete Verbindung (40) mittels eines Hebekrans (36) von der Verbindungseinheit (6) abgehoben wird.

9. Verfahren nach einem der vorhergehenden Ansprüche, wobei das Vorschieben der ersten und zweiten Länge (4a, 4b) des Artikels durch Spanner (31) erfolgt, die gegebenenfalls an der Überbordführungseinrichtung (33) vorgesehen sind.

10. Vorrichtung (3) zum Überborden eines länglichen flexiblen Artikels (4) von einem Schiff (1), der eine Verbindung (40) zwischen einem ersten und einem zweiten Abschnitt (4a, 4b) desselben aufweist, wobei die Vorrichtung (3) eine Speichereinheit (32a, 32b) für jeden der ersten und nachfolgenden zweiten Artikelabschnitte (4a, 4b) umfasst, und Artikelträgermittel (38) zum Vorwärtsbewegen der Artikellängen (4a, 4b) von der Speichereinheit (32a, 32b) zu Überbordführungsmitteln (33), die in einer Höhe über einem Arbeitsdeck (10) des Schiffes (1) vorgesehen und so konfiguriert sind, dass sie eine Artikellänge (4a) tragen und die Artikellänge (4a) überborden, wobei die Vorrichtung (3) ferner ein Haltemittel umfasst, das so konfiguriert ist, dass es eine über Bord gegangene erste Artikellänge (4a) hält und trägt, eine Verbindungseinheit (6), die auf dem Arbeitsdeck (10) des Schiffes (1) positioniert und so konfiguriert ist, dass sie Enden der ersten und zweiten Artikellänge (4a, 4b) verbindet, um die Verbindung (40) auf dem Arbeitsdeck (10) des Schiffes (1) zu erhalten, und Handhabungsmittel, die so konfiguriert sind, dass sie eine vorbereitete Verbindung (40) von der Verbindungseinheit (6) aufnimmt und sie zu dem Überbordführungsmittel (33) bringt, so dass ein Teil der zweiten Artikellänge (4b) von dem Überbordführungsmittel (33) und der Halteeinrichtung gestützt wird und sich die Verbindung (40) in einer stromabwärtigen Position in Bezug auf die Überbordführungseinrichtung (33) befindet.

11. Vorrichtung (3) nach Anspruch 10, wobei die Haltemittel eine Abhängeklammer (39) umfassen, die so konfiguriert ist, dass sie eine überbordende Länge des Artikels (4) aufhängt.

12. Vorrichtung (3) nach Anspruch 10 oder 11, wobei die Verbindungseinheit (6) in Bezug auf die vorrückende Artikellänge (4a, 4b) an einem stromabwärtigen Ende des Überbordführungsmittels (33) positioniert ist.

13. Vorrichtung (3) nach einem der Ansprüche 10 bis 12, wobei das Überbordführungsmittel (33) eine gekrümmte, entweder durchgehende oder unterbrochene Stützfläche umfasst, das zur Führung des Artikels (4) ausgebildet ist, vorzugsweise eine halbkreisförmige Stützfläche (33a).

14. Vorrichtung (3) nach einem der Ansprüche 10 bis 13, wobei die Handhabungsmittel einen Hebekran (36) umfassen.

15. Vorrichtung (3) nach einem der Ansprüche 10 bis 14, wobei die Artikelstützmittel (38) Spanner (31) umfassen, die optional an dem darüber liegenden Führungsmittel (33) vorgesehen sind.

16. Schiff (1) umfassend eine Vorrichtung (3) nach einem der Ansprüche 10 bis 15 zum Überborden eines länglichen, flexiblen Artikels (4), der zwischen einer ersten und einer zweiten Länge (4a, 4b) davon eine Verbindung (40) umfasst.

## Revendications

1. Procédé de passage par-dessus bord à partir d'un navire (1) d'un article souple allongé (4) qui comprend un raccord (40) entre une première et une seconde longueur subséquente de celui-ci, le procédé comprenant les étapes consistant à :
a) faire avancer une première longueur (4a) de l'article (4) depuis une unité de stockage (32a, 32b) vers un moyen de guidage de passage par-dessus bord (33), situé à une hauteur au-dessus d'un pont de travail (10) du navire (1), et le passage par-dessus bord de la première longueur d'article (4a) supportée par le moyen de guidage de passage par-dessus bord (33) jusqu'à la rencontre d'une extrémité de la première longueur (4a) de l'article (4) ;
b) maintenir la première longueur d'article passée par-dessus bord (4a) à l'aide d'un moyen de maintien conçu pour transporter la première longueur d'article passée par-dessus bord (4a) ;
c) guider une extrémité de la première longueur d'article (4a) maintenue par le moyen de maintien vers une unité de raccordement (6) pour préparer un raccord (40) positionné sur le pont de travail (10) du navire (1) ;
d) faire avancer une seconde longueur (4b) de l'article (4) jusqu'à l'unité de raccordement (6) sur le pont de travail (10) du navire (1) et raccorder les extrémités des première et seconde longueurs d'article pour obtenir le raccord (40) sur le pont de travail (10) du navire (1) ;
e) tout en maintenant la première longueur d'article (4a), prendre le raccord (40) ainsi préparé depuis l'unité de raccordement (6) et l'amener vers le moyen de guidage de passage par-dessus bord (33) de telle sorte qu'une partie de la seconde longueur d'article (4b) est supportée par le moyen de guidage de passage par-dessus bord (33) et que le raccord (40) est dans une position en aval par rapport au moyen de guidage de passage par-dessus bord (33) ; et
f) le passage par-dessus bord de la seconde longueur d'article (4b) avec la première longueur d'article (4a) raccordée à celle-ci, supportée par le moyen de guidage de passage par-dessus bord (33) et éventuellement par le moyen de maintien jusqu'à la rencontre d'une extrémité de la seconde longueur (4b) de l'article (4).

2. Procédé selon la revendication 1, dans lequel le fait de faire avancer la première longueur de l'article (4a) est interrompu lors de la rencontre de l'extrémité de la première longueur (4a) de l'article (4).

3. Procédé selon la revendication 1 ou 2, dans lequel le maintien de la première longueur (4a) de l'article (4) comprend la suspension de la première longueur (4a) dans une pince d'accrochage (39) lors de la rencontre de l'extrémité de la première longueur (4a) de l'article (4) pour que la partie de la première longueur d'article (4a) qui s'étend entre l'extrémité et la pince de suspension (39) soit sensiblement déchargée.

4. Procédé selon l'une quelconque des revendications précédentes, dans lequel les extrémités raccordées des première et seconde longueurs (4a, 4b) de l'article (4) sont protégées par une couverture de protection (40-1).

5. Procédé selon l'une quelconque des revendications précédentes, dans lequel les première et seconde longueurs (4a, 4b) de l'article (4) sont protégées par des limiteurs de courbure (41) sur une distance de part et d'autre du raccord (40).

6. Procédé selon la revendication 5, dans lequel les distances sur lesquelles les limiteurs de courbure (41) s'étendent de part et d'autre du raccord (40) couvrent ensemble au moins une longueur du moyen de guidage de passage par-dessus bord (33) qui supporte l'article (4).

7. Procédé selon l'une quelconque des revendications précédentes, dans lequel l'article (4) est guidé sur un support incurvé, constituant une surface de support continue et/ou discontinue du moyen de guidage de passage par-dessus bord (33), de préférence une surface de support semi-circulaire (33a).

8. Procédé selon l'une quelconque des revendications précédentes, dans lequel le raccord préparé (40) est pris depuis l'unité de raccordement (6) par une grue de levage (36).

9. Procédé selon l'une quelconque des revendications précédentes, dans lequel le fait de faire avancer les première et seconde longueurs (4a, 4b) de l'article est effectué par des tendeurs (31), éventuellement prévus sur le moyen de guidage de passage par-dessus bord (33).

10. Dispositif (3) de passage par-dessus bord à partir d'un navire (1) d'un article souple allongé (4) qui comprend un raccord (40) entre une première et une seconde longueur (4a, 4b) de celui-ci, le dispositif (3) comprenant une unité de stockage (32a, 32b) pour chacune de la première et de la seconde longueur subséquente de l'article (4a, 4b), et un moyen de support d'article (38) pour faire avancer les longueurs d'article (4a, 4b) depuis l'unité de stockage (32a, 32b) vers un moyen de guidage de passage par-dessus bord (33), prévus à une hauteur au-dessus d'un pont de travail (10) du navire (1), et conçus pour supporter une longueur d'article (4a) et passer par-dessus bord ladite longueur d'article (4a), dans lequel le dispositif (3) comprend en outre un moyen de maintien conçu pour maintenir et transporter une première longueur d'article (4a) passée par-dessus bord, une unité de raccordement (6) positionnée sur le pont de travail (10) du navire (1) et conçue pour raccorder les extrémités des première et seconde longueurs d'article (4a, 4b) afin d'obtenir le raccord (40) sur le pont de travail (10) du navire (1), et un moyen de manutention conçu pour prendre un raccord préparé (40) depuis l'unité de raccordement (6) et l'amener vers le moyen de guidage de passage par-dessus bord (33) de telle sorte qu'une partie de la seconde longueur d'article (4b) est supportée par le moyen de guidage de passage par-dessus bord (33) et le moyen de maintien et le raccord (40) est dans une position en aval par rapport au moyen de guidage de passage par-dessus bord (33).

11. Dispositif (3) selon la revendication 10, dans lequel le moyen de maintien comprend une pince d'accrochage (39) conçue pour suspendre une longueur passée par-dessus bord de l'article (4).

12. Dispositif (3) selon la revendication 10 ou 11, dans lequel l'unité de raccordement (6) est positionnée au niveau d'une extrémité en aval du moyen de guidage de passage par-dessus bord (33) par rapport à la longueur de l'article (4a, 4b) qui avance.

13. Dispositif (3) selon l'une quelconque des revendications 10 à 12, dans lequel le moyen de guidage de passage par-dessus bord (33) comprend une surface de support incurvée, continue ou discontinue, conçue pour guider l'article (4), de préférence une surface de support semi-circulaire (33a).

14. Dispositif (3) selon l'une quelconque des revendications 10 à 13, dans lequel le moyen de manutention comprend une grue de levage (36).

15. Dispositif (3) selon l'une quelconque des revendications 10 à 14, dans lequel le moyen de support d'article (38) comprend des tendeurs (31), éventuellement prévus sur le moyen de guidage de passage par-dessus bord (33).

16. Navire (1) comprenant un dispositif (3) selon l'une quelconque des revendications 10 à 15 permettant le passage par-dessus bord d'un article souple allongé (4) qui comprend un raccord (40) entre une première et une seconde longueur (4a, 4b) de celui-ci.
